Europäisches Patentamt

European Patent Office

Office européen des brevets

(11) Veröffentlichungsnummer: **0 079 044**
**A1**

# EUROPÄISCHE PATENTANMELDUNG

(21) Anmeldenummer: **82110141.7**

(22) Anmeldetag: **04.11.82**

(51) Int. Cl.³: **G 02 B 5/08**
**B 60 R 1/04, G 02 F 1/13**

(30) Priorität: **06.11.81 DE 3144143**

(43) Veröffentlichungstag der Anmeldung:
**18.05.83 Patentblatt 83·20**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Heintz, Frieder, Dipl.-Ing.**
**Buchenring 36**
**D-7513 Stutensee-Büchig(DE)**

(72) Erfinder: **Knoll, Peter, Dr.**
**Neuwiesenrebenstrasse 42**
**D-7505 Ettlingen(DE)**

(72) Erfinder: **Ziegler, Wolfgang, Dr.**
**Schubertstrasse 32**
**D-7514 Eggenstein(DE)**

(54) Abblendbarer Rückspiegel.

(57) Es werden abblendbare Spiegel mit LCD-Anzeige vorge-schlagen, die entweder nur einen Zirkularpolarisator (1) aufweisen oder bei denen die Polarisatoren (8,9) in der Nähe des Flüssigkristalls (4) angeordnet sind. Druch die Verwen-dung nur eines Zirkularpolarisators (1) oder durch die räumliche Annäherung der Polarisatoren (8,9) wird erreicht, daß Phantombilder nicht auftreten, da diese ineinander verschmelzen.

FIG. 1

R. 17 . 0
30.10.1981 Fd/Jä

Robert Bosch GmbH, 7000 Stuttgart 1

## Abblendbarer Spiegel

Stand der Technik

Die Erfindung geht aus von einem abblendbaren Rückspiegel
nach der Gattung des Hauptanspruchs. Es ist bereits bekannt, Rückspiegel mit LCD-Anzeigen auszustatten. Solche
Spiegel sind wie normale Spiegel zu verwenden. Treten
beispielsweise bei der Fahrt in einem Kraftfahrzeug
Blendungen durch rückwärtige Fahrzeuge auf, wird an die
vorgeschaltete LCD-Anzeige eine Spannung angelegt. Dadurch wird die Reflexion des Spiegels verändert. Es
wird erreicht, daß ein Teil des Lichtes absorbiert
wird. Bekannte Spiegel haben nunmehr den Nachteil,
daß durch Reflexionen an den Schichten einer LCD Phantombilder entstehen, die das Bild verschwommen erscheinen lassen. Diese Reflexionen treten an den Polarisatoren und den Elektroden auf.

Vorteile der Erfindung

Der erfindungsgemäße abblendbare Spiegel mit den kennzeichnenden Merkmalen des Hauptanspruchs hat demgegenüber den Vorteil, daß durch die geringe Bautiefe bzw.
Anordnung der Polarisatoren in der Nähe der Spiegelschicht ein phantombildfreies Reflexionsverhalten erzielt wird. Durch diese Maßnahme sind die abblendbaren

. . .

Rückspiegel mit LCD-Anzeigen mit normalen Spiegelanordnungen gleichwertig und weisen zudem Abblendverhalten auf.

Durch die in den Unteransprüchen aufgeführten Maßnahmen
sind vorteilhafte Weiterbildungen und Verbesserungen
des im Hauptanspruch angegebenen abblendbaren Rückspiegels möglich. Besonders günstig ist es, den Zirkularpolarisator zwischen dem vorderen Glas und einer
Elektrode anzuordnen. Durch diese Maßnahme wird eine
besonders gute Nähe zwischen der Spiegelschicht und
dem Polarisator erzielt. Werden normale Polarisatoren
verwendet, so ist es günstig, diese ebenfalls auf der
Innenseite der Glasplatte anzubringen. Auch hierdurch
können Phantombilder gut vermieden werden. Der Spiegel
wird auf dem rückwärtigen Glas aufgedampft. Besonders
günstig ist es, wenn er auf der dem Flüssigkristall zugewandten Seite des rückwärtigen Glases aufgebracht ist.
Dadurch kann der Abstand zwischen dem Polarisator und
Spiegel weiter vermindert werden. Der Spiegel ist dabei
gleichzeitig als rückwärtige Elektrode verwendbar, so
daß das Aufbringen einer weiteren Elektrode entfällt.
Das vordere Glas ist vorteilhafterweise entspiegelt,
so daß dort Reflexionen nicht auftreten können.

Zeichnung

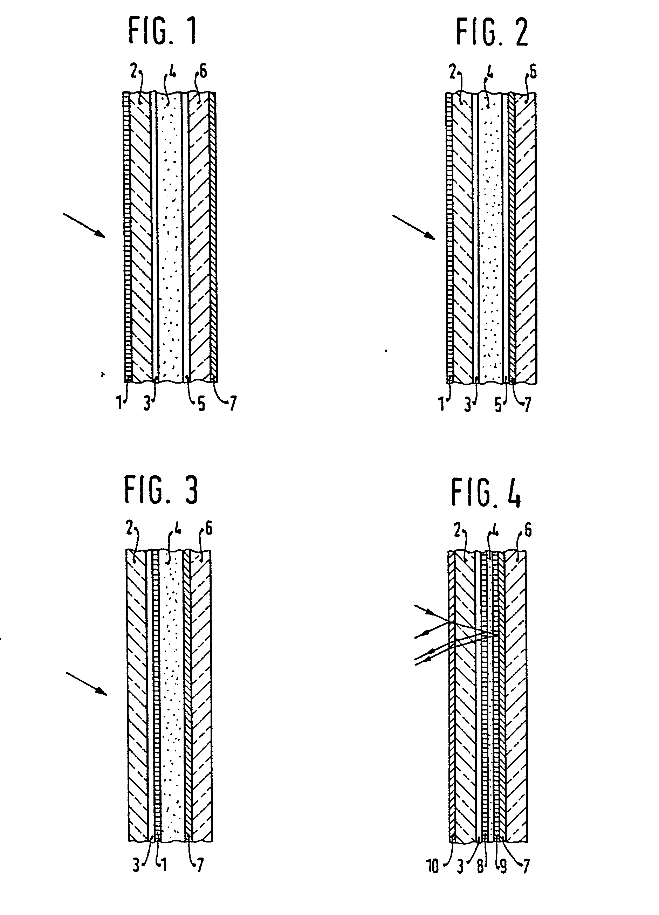

Ausführungsbeispiele der Erfindung sind in der Zeichnung
dargestellt und in der nachfolgenden Beschreibung näher
erläutert. Die Figuren 1 bis 4 zeigen im Schnitt abblendbare Rückspiegel nach der Erfindung.

...

Beschreibung der Ausführungsbeispiele

Der Aufbau eines Spiegels mit Zirkularpolarisator ist in Fig. 1 dargestellt. Mit 1 ist ein Polarisator bezeichnet, der linear polarisiert, wobei das Licht von einem $\lambda/4$-Plättchen in zirkularpolarisiertes Licht umgewandelt wird. Dieser Polarisator wird als Zirkularpolarisator bezeichnet. Dem Zirkularpolarisator 1 folgt eine vordere Glasplatte 2. Auf diese Glasplatte 2 ist eine Leitschicht 3 aufgebracht. Zwischen einer auf der rückwärtigen Seite aufgebrachten Glasplatte 6 mit Leitschichten 5 ist ein Flüssigkristall 4 eingebettet. Die Spiegelschicht 7 befindet sich hinter der rückwärtigen Glasplatte 6. Bei durch die Elektroden 3 und 5 angesteuerter Flüssigkristallschicht 4 passiert das durch den Zirkularpolarisator 1 zirkularpolarsierte Licht ungehindert die Flüssigkristallzelle und wird an der Spiegelschicht 7 reflektiert. Die Spiegelschicht wird entweder als Aluminium- oder Silberschicht aufgedampft oder besteht aus einem rückwärtig aufgeklebten Spiegel. Durch die Reflexion wird der Drehsinn der zirkularen Polarisation umgekehrt. Im weiteren Verlauf des Strahlenganges passiert das Licht wieder ungehindert die Flüssigkristallschicht und wird von dem $\lambda/4$-Plättchen in linear polarisiertes Licht, senkrecht zur ursprünglichen Polarisationsebene rückgewandelt, so daß es vom Polarisator absorbiert wird. Die angsteuerte Flüssigkristallschicht erscheint also dunkel. Im nicht angesteuerten Zustand des Flüssigkristalls wird die zirkulare Polarisation de Lichtes zerstört. Demzufolge erscheinen die Flächenelemente hell. Da hierbei nur ein Polarisator erforderlich ist, ergibt sich eine geringe Bautiefe des Spiegels und deshalb eine geringere Neigung zu Phantombildern. Auch vereinfacht sich die

...

Fertigung solcher Anordnungen, so daß der Spiegel kostengünstiger ist.

Eine weitere Anordnung, durch die noch günstigere
Resultate zu erzielen sind, ist in Fig. 2 gezeigt.
Dem Zirkularpolarisator 1 folgt eine Glasplatte 2,
auf der eine leitende Schicht 3 aufgedampft ist. Dem
Flüssigkristall 4 folgt eine weitere Leitschicht 5,
die auf der Spiegelschicht 7 aufgedampft ist. Die
Spiegelschicht 7 ihrerseits wurde zuvor auf der Glasplatte 6 aufgedampft. Bei dieser Anordnung wird die
Spiegelschicht 7 vor der Fertigung der LCD auf der
Seite der hinteren Glasplatte aufgedampft, die zum
Inneren der Zelle zeigt. Die Spiegelschicht kann dabei
gleichzeitig als Leitfähigkeitsschicht dienen, so daß
die Leitschicht 5 entfallen kann.

Ein weiteres Beispiel ist in der Fig. 3 dargestellt.
Die Glasplatte 2 zeigt hierbei zum Betrachter. Der
Zirkularpolarisator 1 befindet sich hierbei zwischen
dem Flüssigkristall 4 und der Glasplatte 2 mit der Leitschicht 3. Eine Spiegelschicht 7, die gleichzeitig als
Leitschicht für den Flüssigkristall 4 dient, ist auf
der Glasplatte 6 aufgedampft und so angebracht, daß
die Spiegelschicht 7 zum Inneren des Spiegelkristalls
zeigt. Durch die besonders gute räumliche Nähe zwischen
Spiegelschicht 7 und Zirkularpolarisator 1 wird erreicht,
daß Phantombilder nicht entstehen. Die Funktionsweise
der Anordnungen nach Fig. 2 und Fig. 3 entspricht der
nach Fig. 1, so daß sich ein weiteres Eingehen erübrigt.
Die Flüssigkristallzellen sind auch vorteilhafterweise
als Projektionsanzeigen einsetzbar.

...

In Fig. 4 ist ein weiterer Rückspiegel aufgezeigt. Die Glasplatte 2 weist auf der dem Betrachter zugewandten Seite eine Entspiegelungsschicht 10 auf. Weiterhin ist auf der Glasplatte 2 auf der dem Flüssigkristall zugewandten Seite eine Leitschicht 3 aufgebracht. Der Leitschicht 3 folgt ein Polarisator 8. Der Flüssigkristall 4 ist zwischen dem Polaristor 8 und einer Leitschicht 9 eingebettet. Die Leitschicht liegt auf einer Glasplatte auf, der zuvor eine Spiegelschicht 7 aufgedampft wurde. Die Spiegelschicht 7 befindet sich zwischen dem Glas 6 und dem Polarisator 9. Im Beispiel dient die Spiegelschicht 7 gleichzeitig als Leitschicht.

Ein eintreffender Lichtstrahl wird erstmalig an der Entspiegelungsschicht 10 reflektiert. Diese Reflexion ist jedoch gering und kann vernachlässigt werden. Der Lichtstrahl dringt nun in das Glas 2 ein und wird weiter an der Grenzfläche zwischen Leitschicht 3 und Polarisator 8 reflektiert. Das nunmehr polarisierte Licht wird bei nicht angesteuerter Flüssigkristallschicht im Flüssigkristall 4 durchgelassen, passiert ungehindert den Polarisator 9 und wird von der Spiegelschicht reflektiert. Liegt Spannung an den Elektoden 3 und 7 an, kann das polarisierte Licht den Polarisator 9 nicht passieren, da die Polarisationsrichtungen von Polarisator 8 und Polarisator 9 zueinander senkrecht angeordnet sind, die Zelle erscheint nunmehr dunkel

Durch die räumliche Nähe der beiden Polarisatoren 8 und 9 fällt die Hauptreflexion mit der Teilreflexion am Übergang von Polarisator 8 in den Flüssigkristall 4 zusammen, so daß sich ein phantombildfreies Reflexions-verhalten ergibt.

...

**0079044**
**17446**

Die gezeigte Anordnung braucht nicht wie bei normalen
LCD-Anordnungen mit Wechselstrom betrieben werden, sondern durch das Isolationsverhalten der Polarisatoren 8
und 9 ist ein Gleichspannungsbetrieb möglich. Auch
zusätzliche Orientierungsschichten, die üblicherweise
für die Flüssigkristallmoleküle benötigt werden, können
entfallen, da die Orientierung durch Reiben der Polarisatorenoberfläche an der dem Flüssigkristall zugewandten
Seite bewirkt werden kann. Der Rückspiegel ist des weiteren vor dem Zerkratzen geschützt, da die Polarisatoren
8 und 9 durch die Gläser 2 und 6 geschützt sind. Dadurch
vereinfacht sich auch die Entspiegelung der dem Beobachter
zugekehrten Glasplatte 2, da besser, leicht und kostengünstig entspiegelt werden kann.

R.  17446
30.10.1981 Fd/Jä

Robert Bosch GmbH, 7000 Stuttgart 1

Ansprüche

1. Abblendbarer Rückspiegel mit einem Spiegel und einer darauf aufgebrachten Flüssigkristallanzeige, mit Gläsern, in denen der Flüssigkristall eingeschlossen ist und mit auf den Gläsern aufgebrachten Polarisatoren, dadurch gekennzeichnet, daß ein Zirkularpolarisator (1) mit Lambda-Viertel-Plättchen Verwendung findet.

2. Abblendbarer Rückspiegel nach Anspruch 1, dadurch gekennzeichnet, daß der Zirkularpolarisator (1) mit Lambda-Viertel-Plättchen zwischen der Elektrode (3) des vorderen Glases (2) und einer Flüssigkristallschicht (4) angeordnet ist.

3. Abblendbarer Rückspiegel mit einem Spiegel und einer darauf aufgebrachten Flüssigkristallanzeige, mit Gläsern, in denen der Flüssigkristall eingeschlossen ist und mit auf den Gläsern aufgebrachten Polarisatoren, dadurch gekennzeichnet, daß die Polarisatoren (8, 9) auf der Innenseite der Glasplatten (2, 6) angebracht sind.

4. Abblendbarer Rückspiegel nach einem der Ansprüche 1 bis 3, dadurch gekennzeichnet, daß der Spiegel (7) auf dem rückwärtigen Glas (6) aufgedampft ist.

...

5. Abblendbarer Rückspiegel nach einem der Ansprüche 1 bis 3, dadurch gekennzeichnet, daß der Spiegel (7) auf der dem Flüssigkristall (4) zugewandten Seite des rückwärtigen Glases (6) aufgebracht ist.

6. Abblendbarer Rückspiegel nach Anspruch 5, dadurch gekennzeichnet, daß der Spiegel (7) als rückwärtige Elektrode Verwendung findet.

7. Abblendbarer Rückspiegel nach einem der Ansprüche 1 bis 6, dadurch gekennzeichnet, daß die vordere Glasplatte (2) entspiegelt ist.

8. Abblendbarer Rückspiegel nach einem der Ansprüche 3 bis 7, dadurch gekennzeichnet, daß an die Elektroden (3, 7) Gleichspannung anlegbar ist.

FIG. 1

FIG. 2

FIG. 3

FIG. 4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | **EINSCHLÄGIGE DOKUMENTE** | | EP 82110141.7 |
| Y | DE - A1 - 2 948 514 (AUGUSTIN)  * Fig.; Seite 3, Zeile 6 - Seite 4, Zeile 20 *  -- | 1 | G 02 B 5/08  B 60 R 1/04  G 02 F 1/13 |
| Y | DE - A1 - 2 735 195 (SIEMENS)  * Fig. 1,2; Seite 6, Zeile 12 - Seite 7, Zeile 7; Seite 7, Zeile 29 - Seite 8, Zeile 21 * | 1 | |
| A | | 4,5 | |
| | -- | | |
| A | US - A - 4 266 856 (TOGASHI)  * Fig. 3,4,10; Spalte 5, Zeile 10 - Spalte 6, Zeile 29; Spalte 7, Zeile 47 - Spalte 8, Zeile 59 *  -- | 1,4,5, 7 | |
| A | US - A - 4 080 046 (NISHIZAKI)  * Fig. 2; Spalte 2, Zeile 60 - Spalte 3, Zeile 35 *  -- | 1 | **RECHERCHIERTE SACHGEBIETE (Int. Cl. ³)**  G 02 B 5/00  B 60 R 1/00  G 02 F 1/00 |
| A | EP - A1 - 0 030 600 (VDO)  * Anspruch 1; Seite 2, Zeile 31 - Seite 3, Zeile 32; Seite 5, Zeile 13 - Seite 6, Zeile 21; Fig. *  ---- | | |

X  Der vorliegende Recherchenbericht wurde für alle Patentansprüche erstellt.

| Recherchenort | Abschlußdatum der Recherche | Prüfer |
|---|---|---|
| WIEN | 20-01-1983 | GRONAU |